# EUROPÄISCHE PATENTANMELDUNG

(11) **EP 4 382 789 A1**
(43) Veröffentlichungstag der Anmeldung: **12.06.2024**
(21) Anmeldenummer: 22212638.5
(22) Anmeldetag: 09.12.2022
(51) Int. Cl.: F16L 5/04, F16L 5/08, F16L 5/14, G01L 5/1627, H02G 3/22

(54) **FÜLLELEMENT UND BAUELEMENT UMFASSEND EIN FÜLLELEMENT SOWIE VERFAHREN**

(71) Anmelder: Hilti Aktiengesellschaft, 9494 Schaan (LI)
(72) Erfinder: Zientek, Michal Wladyslaw, 6710 Nenzing (AT)
(74) Vertreter: Hilti Aktiengesellschaft Corporate Intellectual Property

(57) **Zusammenfassung**

Die Erfindung betrifft ein Füllelementsystem (14) zum Einbau in eine Durchgangsöffnung (12) eines Bauelements (10), umfassend wenigstens ein Füllelement (16), insbesondere aus einem Brand-hemmenden Material ausgebildet, ein einstellbares Stellelement (22), das eingerichtet ist, eine einstellbare Kraft (F) und / oder einen einstellbaren Druck auf das Füllelement (16) auszuüben und / oder eine Abmessung (h), insbesondere des Stellelements (22) und / oder des Füllelements (16), einzustellen, und ein Sensorsystem (26). Das Sensorsystem (26) weist wenigstens einen Sensor (28) zur Erfassung der auf das Füllelement (16) wirkenden Kraft (F), des auf das Füllelement (16) wirkenden Drucks und / oder einer Abmessung (h), insbesondere des Stellelements (22) und / oder des Füllelements (16), auf. Des Weiteren betrifft die Erfindung ein Bauelement (10) und ein Verfahren. Die Erfindung ermöglicht einen besonders sicheren Einbau eines Füllelements (16), beispielsweise eines Brandschutzelements, in die Durchgangsöffnung (12).

## Beschreibung

Die Erfindung betrifft die Erfindung ein Füllelementsystem zum Einbau in eine Durchgangsöffnung eines Bauelements. Des Weiteren betrifft die Erfindung ein Bauelement, beispielsweise eine Wand, eine Decke oder einen Boden eines Gebäudes, mit einer Durchgangsöffnung und einem solchen Bauelement. Das Bauelement soll gegen eine Ausbreitung von Gefahren wie Hitze oder Kälte, Rauch, Lärm oder dergleichen, durch die Durchgangsöffnung hindurch geschützt werden.

Vorzugsweise sollen Leitungen, beispielsweise Stromleitungen oder Wasserleitungen, durch die Durchgangsöffnung geführt werden können.

Die übrige Durchgangsöffnung kann mit Füllelementen, beispielsweise Brandschutzziegeln, befüllt sein, um den Schutz des Gebäudes beziehungsweise des Bauelements zu erzielen.

Aus sicherheitstechnischen Gründen muss jedoch sichergestellt werden, dass die Füllelemente korrekt eingebaut sind, damit die Durchgangsöffnung auch tatsächlich vor der jeweiligen Gefahr geschützt ist. Derart geschützte Durchgangsöffnungen sollten zudem regelmäßig überprüft werden, um einen dauerhaften Schutz zu gewährleisten.

Bauen unerfahrene Monteure Füllelemente in die Durchgangsöffnungen, so können dabei schwerwiegende Fehler auftreten. Diese werden oftmals nicht rechtzeitig entdeckt, da teilweise lediglich eine manuelle, visuelle Kontrolle durch den, im Schlechtfall unerfahrenen, Ausführenden selbst erfolgt.

Manuelle Kontrollen sind zudem sehr aufwendig. Aufgrund zu seltener Überprüfungsintervalle können zudem längere Zeiträume entstehen, während der die ordnungsgemäße Funktion eines solchen Schutzes nicht sichergestellt werden kann.

Alternativ sind vereinzelt auch Sensorsysteme bekannt, die eine solche Überprüfung der Durchgangsöffnung automatisiert übernehmen. Derartige Systeme sind beispielsweise vor oder hinter der Durchgangsöffnung anzubringen. Dies ist aufgrund von Platzmangel jedoch oftmals nicht möglich.

Aufgabe der vorliegenden Erfindung ist es daher, ein Füllelementsystem anzubieten, das einen zuverlässigen Schutz eines Bauelements mit einer Durchgangsöffnung gewährleistet, sowie ein Bauelement mit einer Durchgangsöffnung, das zuverlässig geschützt ist. Des Weiteren ist eine Aufgabe darin zu sehen, ein Verfahren anzubieten, durch das ein Bauelement mit einer Durchgangsöffnung besonders zuverlässig geschützt werden kann.

Gelöst wird die Aufgabe durch ein **Füllelementsystem** zum Einbau in eine Durchgangsöffnung eines Bauelements, umfassend wenigstens ein Füllelement, insbesondere aus einem Brand-hemmenden Material ausgebildet, ein einstellbares Stellelement, das eingerichtet ist, eine einstellbare Kraft und / oder einen einstellbaren Druck auf das Füllelement auszuüben und / oder eine Abmessung, insbesondere des Stellelements und / oder des Füllelements, einzustellen, und ein Sensorsystem, wobei das Sensorsystem wenigstens einen Sensor zur Erfassung der auf das Füllelement wirkenden Kraft, des auf das Füllelement wirkenden Drucks und / oder einer Abmessung, insbesondere des Stellelements und / oder des Füllelements, aufweist.

Das Füllelement kann somit in die Durchgangsöffnung eingebaut werden. Durch Einstellen des Stellelements kann ein Druck und / oder eine Kraft aufgebaut werden, um einen sicheren Sitz des Füllelements in der Durchgangsöffnung sicherzustellen. Durch den Druck oder die Kraft kann auch, insbesondere, wenn es sich bei dem Füllelement um ein Dichtelement, beispielsweise zur Abdichtung gegen Rauch, Gase und / oder Lärm, handelt, eine Dichtfunktion des Füllelements eingerichtet und / oder verbessert werden. Mit Hilfe des Sensorsystems kann der Aufbau des Drucks und / oder der Kraft überwacht und / oder gesteuert werden. Beispielsweise kann das Stellelement solange eingestellt werden, bis das Sensorsystem einen definierten Mindestdruck und / oder eine definierte Mindestkraft detektiert. Somit kann die Sicherheit, dass das Füllelement korrekt eingebaut ist, verbessert werden.

Analog kann alternativ oder ergänzend auch vorgesehen sein, dass eine Abmessung durch das Stellelement einstellbar ist. Die Abmessung kann eine Länge, eine Fläche, beispielsweise eine Querschnittsfläche, oder ein Volumen sein. Diese Abmessung oder eine andere Abmessung, insbesondere des Stellelements und / oder des Füllelements, kann mit Hilfe des Sensorsystems erfassbar sein. Beispielsweise kann eine Höhe des Stellelements einstellbar sein. Das Stellelement kann zunächst mit einer geringen Höhe in die Durchgangsöffnung eingesetzt werden. Dann kann die Höhe des Stellelements vergrößert werden, bis das Stellelement eine verbleibende freie Höhe der Durchgangsöffnung vollständig überdeckt. Dazu kann die Höhe des Stellelements mit Hilfe des Sensorsystems erfasst werden. Bei Erreichen oder Überschreiten eines Grenzwerts der Höhe, insbesondere entsprechend der anfänglich vorhandenen freien Höhe, kann der Vorgang beendet werden. Somit kann die Sicherheit, dass dass Füllelement, zusammen mit dem Stellelement, korrekt eingebaut ist, sodass die Durchgangsöffnung beispielsweise vollständig abgedichtet ist, verbessert werden. In analoger Weise ist auch denkbar, dass eine Abmessung, beispielsweise eine Höhe, des Füllelements erfassbar ist.

Es kann somit zuverlässig sichergestellt werden, dass das Füllelement eine Schutzfunktion in korrekter Weise ausübt. Somit kann das Bauelement mit seiner Durchgangsöffnung besonders zuverlässig geschützt werden.

Das Füllelement kann mehrere Einzelteile aufweisen. Es kann beispielsweise ein oder mehrere Brandschutzziegel aufweisen. Die Brandschutzziegel können durch Ausgleichsplatten voneinander getrennt sein.

Um die Durchgangsöffnung möglichst vollständig auszufüllen, kann das Füllelement Abmessungen entsprechend oder zumindest im Wesentlichen entsprechend von Innenabmessungen der Durchgangsöffnung, in der das Füllelement angeordnet werden soll, aufweisen. Dabei kann unter "im Wesentlichen entsprechend" beispielsweise bei einem kompressiblen Füllelement verstanden werden, dass es zwar in einer Dimension größer als die Durchgangsöffnung sein kann, aber zumindest unter Pressung in die Durchgangsöffnung eingepasst werden kann.

Das Füllelement kann wenigstens eine Verbindungsöffnung aufweisen. Die Verbindungsöffnung kann eingerichtet sein, eine Leitung, beispielsweise ein Kabel, ein Rohr, ein Schlauch und / oder dergleichen, so aufzunehmen, dass die Leitung auf gegenüberliegenden Seiten des Füllelements aus diesem herausragt. Die Leitung kann somit entlang der Verbindungsöffnung durch das Füllelement hindurch verlegbar und / oder verlegt sein.

Das Sensorsystem kann einen Signalgeber, beispielsweise eine Signalleuchte, aufweisen. Die Signalleuchte kann wenigstens eine LED aufweisen. Allgemein kann der Signalgeber beispielsweise ein optischer, ein akustischer und / oder ein aus Distanz abfragbarer Signalgeber sein. Ein aus Distanz abfragbarer Signalgeber kann beispielsweise per Funk abfragbar sein.

Ansprechend auf ein Erreichen und / oder ein Überschreiten einer Mindestkraft und / oder eines Mindestdrucks und / oder ansprechend auf ein Erreichen und / oder Überschreiten eines Grenzwertes der Abmessung kann das Sensorsystem eingerichtet sein, über den Signalgeber ein Signal auszugeben. Beispielsweise kann die Signalleuchte aufleuchten, sobald wenigstens eine Mindestanpresskraft mit Hilfe des Stellelements auf das Füllelement oder zumindest auf einen Teil des Füllelements wirkt. Die Mindestanpresskraft kann einer Mindestkraft entsprechen, die für einen zuverlässigen Sitz und / oder eine zuverlässige Dichtwirkung des Füllelements erforderlich ist.

Denkbar ist, dass das Füllelement zum Gefahrenschutz ausgebildet ist. Beispielsweise kann es ein Brandschutzelement, ein Schallschutzelement und / oder ein Fluid-Dichtelement sein und / oder ein solches umfassen. Ein Fluid-Dichtelement kann eingerichtet sein, gegen einen Übertritt einer Flüssigkeit, beispielsweise Wasser, und / oder eines Gases, beispielsweise eines Partikelhaltigen Gases wie beispielsweise Rauch, abzudichten. In solchen Fällen ist es besonders vorteilhaft, wenn der inhärent vorgesehene Gefahrenschutz auch tatsächlich zuverlässig verfügbar ist.

Bei einer Klasse von Füllelementen weisen diese ein elastisches Material auf. Unter einem elastischen Material kann dabei ein Material verstanden werden, das überwiegend elastisch und allenfalls in geringerem Maße lediglich plastisch verformbar ist. Wird somit das Stellelement eingestellt, kann das Füllelement Verschiebungen, beispielsweise einer Anlagefläche des Stellelements, nachfolgen. Spalte zwischen dem Stellelement und dem Füllelement, beispielsweise bei einem geringfügigen Lösen des Stellelements, können vermieden werden. Eine Dichtfunktion des Füllelements kann dadurch zudem verbessert sein, da sich das Füllelement besser an seine Umgebung, beispielsweise an das Stellelement und / oder eine Wandung am Rand der Durchgangsöffnung des Bauelements, anschmiegen kann.

Das Füllelement kann ein Schaummaterial aufweisen. Das Schaummaterial kann aufgeschäumt und / oder aufschäumbar sein. Es kann insbesondere ein selbstaufschäumendes Material aufweisen. Denkbar ist beispielsweise, dass ein Material des Füllelements bei Erreichen oder Überschreiten einer Grenztemperatur, beispielsweise in einem Brandfall, sich überproportional ausdehnt und / oder aufschäumt. Das Füllelement kann insbesondere ein intumeszierendes Material aufweisen.

Der Sensor kann beispielsweise kapazitiv, piezoelektrisch und / oder durch Veränderung seines Widerstands den Druck und / oder die Kraft messen.

Bei eigenen Untersuchungen hat sich gezeigt, dass die Messergebnisse des Sensors stark temperaturabhängig sein können. Daher ist es vorteilhaft, wenn das Sensorsystem einen Temperatursensor aufweist. Mit Hilfe des Temperatursensors kann das Messergebnis des Sensors Temperatur-kompensiert werden.

Zur Versorgung kann das Sensorsystem eine Energiequelle umfassen. Die Energiequelle kann einen wiederaufladbaren Akkumulator und / oder einen Superkondensator umfassen. Denkbar ist insbesondere, dass die Energiequelle kabellos wiederaufladbar, beispielsweise induktiv aufladbar, ist.

Die Energiequelle kann alternativ oder ergänzend auch einen Nanogenerator umfassen. Der Nanogenerator kann zum Energy Harvesting eingerichtet sein. Der Nanogenerator kann eingerichtet sein, Druck-basiert, beispielsweise auf Basis des piezoelektrischen Effekts, thermisch, beispielsweise thermoelektrisch und / oder pyroelektrisch, Funkwellen-basiert, Osmose-basiert und / oder photovoltaisch zu arbeiten.

Weiter kann das Sensorsystem eine Steuerung aufweisen. Die Steuerung kann einen Microcontroller umfassen. Der Mikrocontroller kann eingerichtet sein, mithilfe des Sensors des Sensorsystems die Durchgangsöffnung zu überwachen.

Die Steuerung und / oder die Energiequelle können in ein Gehäuse eingebaut sein. So können sie vor Umwelteinflüssen geschützt sein. Das Sensorsystem kann dadurch eine besonders lange Lebensdauer aufweisen.

Bei besonders vorteilhaften Ausführungsformen kann das Sensorsystem, insbesondere die Steuerung, ein Kommunikationsmodul aufweisen. Das Kommunikationsmodul kann ein drahtloses Kommunikationsmodul sein und / oder aufweisen. Denkbar ist insbesondere, dass das Kommunikationsmodul einem Funkstandard folgt, der besonders geeignet ist, aus einem Bauelement heraus, beispielsweise aus dem Inneren einer Stahlbetonwand heraus, zu kommunizieren. Vorzugsweise ist der vom Kommunikationsmodul verwendete Funkstandard zudem auf einen besonders energiesparenden Betrieb eingerichtet.

Dann ist es möglich, dass das Sensorsystem erfasste Messwerte und / oder detektierte Änderungen in und / oder an der Durchgangsöffnung an ein entferntes Rechnersystem überträgt. Das entfernte Rechnersystem kann ein Cloud-basiertes Rechnersystem sein. Denkbar ist insbesondere, dass das Cloud-basierte Rechnersystem und / oder ein anderes, vom Cloud-basierten Rechnersystem separates Rechnersystem eingerichtet ist, einen Zustand des Sensorsystems und / oder einer dem Sensorsystem zugeordneten Durchgangsöffnung abzufragen. Ein Zustand des Sensorsystems kann beispielsweise einem Ladezustand des Energiespeichers entsprechen. Ein Zustand der Durchgangsöffnung kann beispielsweise einer ordnungsgemäßen beziehungsweise nicht ordnungsgemäßen Anordnung der Füllelemente in der Durchgangsöffnung entsprechen.

Beispielsweise ist denkbar, dass ein Benutzer des anderen Rechnersystems aus einer Distanz über das Cloud-basierte Rechnersystem den Zustand abruft. Der Benutzer kann somit rasch und mühelos erkennen, ob beispielsweise die Durchgangsöffnung weiterhin ordnungsgemäß befüllt ist oder ob die Durchgangsöffnung beispielsweise unzulässige Lücken aufgrund einer nicht ordnungsgemäßen Befüllung mit Füllelementen aufweist.

In den Rahmen der Erfindung fällt des Weiteren ein **Bauelement** eines Gebäudes, beispielsweise eine Wand, eine Decke oder ein Boden eines Gebäudes, wobei das Bauelement eine Durchgangsöffnung aufweist, und wobei sich in der Durchgangsöffnung ein Füllelementsystem nach der hier beschriebenen Art befindet.

Unter Überwachung mit Hilfe des Sensorsystems kann mit Hilfe des Stellelements das Füllelement in der Durchgangsöffnung mindestens bis zu einem erforderlichen Mindestdruck und / oder bis mindestens zu einer Mindestpresskraft und / oder bis zum Erreichen und / oder Überschreiten eines Grenzwertes der Abmessung zusammengedrückt werden. Durch das Sensorsystem kann somit die Einhaltung ein oder mehrerer Sicherheitsvorgaben beim Einbau des Füllelementsystems sichergestellt werden. Das Bauelement kann somit besonders zuverlässig durch das Füllelement geschützt sein.

Das Bauelement kann Teil eines Hochbaus und / oder eines Tiefbaus sein.

Weiter betrifft die Erfindung auch ein **Verfahren zum Einbau eines Füllelementsystems** der hier beschriebenen Art in ein Bauelement der hier beschriebenen Art, wobei das Stellelement solange vergrößert wird, bis der Signalgeber des Sensorsystems ein Signal gibt. Dazu kann das Sensorsystem eingerichtet sein, erst bei Erreichen und / oder bei Überschreiten eines Mindestanpressdrucks ein Signal zu geben. Somit kann sichergestellt werden, dass das Füllelement mit einem ordnungsgemäßen Druck und / oder Kraft, insbesondere ein Mindestdruck und / oder einer Mindestkraft, in die Durchgangsöffnung eingebaut ist. Somit kann das Füllelement wiederum seine Schutzfunktion besonders zuverlässig wahrnehmen.

Nach dem Einbau des Füllelementsystems, insbesondere nach dem Einbau des Sensorsystems, kann das Sensorsystem ein oder mehrfach, beispielsweise im Falle eines drahtlosen Signalgebers, drahtlos abgefragt werden. Somit kann auch zu einem späteren Zeitpunkt, beispielsweise im Rahmen von Prüf- und / oder Wartungsarbeiten, das Vorliegen eines Mindestanpressdrucks und / oder einer Mindestanpresskraft und / oder ein Grenzwert der Abmessung, zuverlässig sichergestellt werden und / oder bei Bedarf der Zustand des Füllelementsystems, zum Beispiel durch erneute Einstellung des Stellelements, korrigiert werden.

Dazu kann das Sensorsystem, insbesondere der Signalgeber, eingerichtet sein, bei einer Veränderung, beispielsweise um ein Mindestmaß und / oder mit einer Mindestveränderungsgeschwindigkeit, der ermittelten Kraft und / oder des ermittelten Drucks ebenfalls und / oder alternativ ein Signal mit dem Signalgeber zu geben. Beispielsweise kann bei einem Kraft- und / oder Druckabfall ein Signal gegeben werden. Das Signal kann beispielsweise auf ein entferntes, beispielsweise cloud-basiertes, Rechnersystem übertragen werden. Von dort kann es abgerufen und / oder auf einer Signalausgabeeinheit, beispielsweise einer Anzeigeeinheit, insbesondere eines tragbaren Rechners wie beispielsweise einem Smartphone, ausgegeben werden.

Somit kann durch eine solche Überwachung sichergestellt werden, dass bei einer Durchgangsöffnung, beispielsweise eine Durchgangsöffnung in einer zwei Räume trennenden Wand, wobei die Durchgangsöffnung abgesehen von etwaigen durch sie hindurchführenden Rohren oder Leitungen mit als Brandschutzelementen ausgebildeten Füllelementen abgedichtet ist, ein ununterbrochener Brandschutz gewährleistet werden kann.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert.

### Es zeigen:

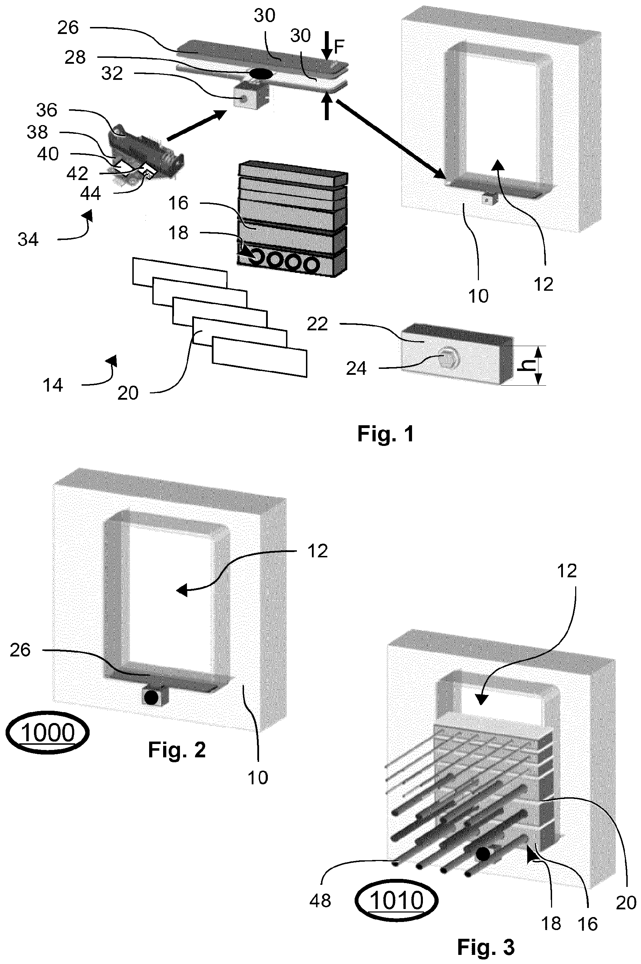

- **Fig. 1** bis **Fig. 5**: zeigen verschiedene Phasen des Einbaus eines Füllelementsystems in ein Bauelement mit einer Durchgangsöffnung.

In der nachfolgenden Beschreibung der Figuren werden zur Erleichterung des Verständnisses der Erfindung für gleiche oder sich funktional entsprechende Elemente jeweils die gleichen Bezugszeichen verwendet.

Zur Verbesserung der Übersichtlichkeit ist innerhalb der nachfolgenden Figuren von mehreren gleichen Elementen soweit nicht anderweitig erwähnt, jeweils nur eines mit einem Bezugszeichen gekennzeichnet.

**Fig. 1** zeigt ein Bauelement **10**, das eine Durchgangsöffnung **12** aufweist, in einer perspektivischen Schrägansicht. Das Bauelement 10 ist Teil einer Wand eines Gebäudes.

Fig. 1 zeigt weiter ein Füllelementsystem **14,** das in die Durchgangsöffnung 12 eingebaut werden soll. Das Füllelementsystem 14 ist als Brandschutzsystem ausgebildet. Es soll bei einem Brandfall einen Durchtritt von Flammen, Rauch, Hitze etc. durch die Durchgangsöffnung 12 sicher verhindern und somit die Durchgangsöffnung 12 bzw. das Bauelement 10 schützen. Das Brandschutzsystem ist zudem eingerichtet, dass Leitungen bei wirkendem Schutz der Durchgangsöffnung 12 durch die Durchgangsöffnung 12 führbar sind.

Das Füllelementsystem 14 ist in der in Fig. 1 gezeigten Phase noch nicht vollständig in das Bauelement 10 eingebaut.

Es umfasst mehrere Füllelemente **16**. Die Füllelemente 16 sind als Brandschutzziegel ausgebildet. Sie sind dazu aus einem Brand-hemmenden Material ausgebildet. Sind sind elastisch, insbesondere sind sie aus einem kompressiblen Schaummaterial ausgebildet.

Um Leitungen durch die Füllelemente 16 hindurch führen zu können, können ein oder mehrere Verbindungsöffnungen **18** in die Füllelemente 16 eingearbeitet sein oder werden.

Denkbar ist auch, dass mehrere Arten von Füllelementen 16 vorgesehen sind, die unterschiedliche Anzahlen, unterschiedliche Größen und / oder Querschnitte der Verbindungsöffnungen 18 aufweisen.

Mehrere Trennbleche **20** sind zur Anordnung zwischen jeweils zwei der Füllelemente 16 vorgesehen.

Das Füllelementsystem 14 weist des Weiteren ein einstellbares Stellelement **22** auf. Das Stellelement 22 ist bezüglich seiner Abmessung **h**, also in seiner Höhe, verstellbar. Dazu weist es ein Betätigungselement **24** in Form eines Schraubknopfes auf, durch das die Abmessung h veränderbar ist. Wie noch weiter unten im Detail erläutert, kann somit durch Veränderung der Abmessung h eine Kraft eingestellt werden, mit der durch das Stellelement 22 benachbarte Füllelemente 16 zusammengepresst werden.

Weiter weist das Füllelementsystem 14 ein Sensorsystem **26** auf. Das Sensorsystem 26 weist einen Sensor **28** in Form eines Kraft-Sensors auf. Der Sensor 28 ist zur Erfassung einer Kraft **F**, mit der zwei sich gegenüberliegende Sensorplatten **30** zusammengedrückt werden, eingerichtet.

In der in Fig. 1 dargestellten Phase ist das Sensorsystem 26 bereits in der Durchgangsöffnung 12 montiert. Zur Erläuterung von Details des Sensorsystems 26 ist dieses separat und vergrößert zusätzlich abgebildet.

Das Sensorsystem 26 ist ferner mit einem Signalgeber **32** in Form einer LED, also einer Form einer Signalleuchte, ausgestattet. Der Signalgeber 32 kann insbesondere eine mehrfarbige LED umfassen.

Das Sensorsystem 26 ist eingerichtet, ansprechend darauf, dass die Kraft F eine Mindestkraft erreicht oder überschreitet, ein Signal auf dem Signalgeber 32 auszugeben. Insbesondere leuchtet der Signalgeber 32 grün, wenn die Mindestkraft erreicht oder überschritten ist, und rot, solange die Mindestkraft noch nicht erreicht ist.

Dazu weist das Sensorsystem eine Steuerung **34** auf. Die Steuerung 34 ist in den Signalgeber 32 integriert. Aus Darstellungsgründen ist die Steuerung 34 in Fig. 1 separat, insbesondere außerhalb des Signalgebers 32, dargestellt.

Die Steuerung 34 weist eine Energiequelle **36** zur Energieversorgung auf. Die Energiequelle 36 umfasst einen wiederaufladbaren Akkumulator. Beispielsweise kann es sich um einen Lithiumbasierten Akkumulator handeln.

Weiter weist die Steuerung 34 einen Microcontroller **38** auf. Der Mikrocontroller 38 umfasst einen Prozessor **40**, einen Speicher **42** und Programmcode **44**. Der Programmcode 44 ist in dem Speicher 42 abrufbar abgelegt und auf dem Prozessor 40 ausführbar.

Der Programmcode 44 in Verbindung mit dem übrigen Mikrocontroller 38 ist eingerichtet, von dem Sensor 28 erhaltene Messwerte auszuwerten.

Die Steuerung 34 weist weiter ein Kommunikationsmodul **46** auf. Das Kommunikationsmodul 46 umfasst ein Funkmodul zur drahtlosen Kommunikation mit einem externen Rechnersystem. Dadurch können ermittelte Messwerte über das Kommunikationsmodul 46 an ein solches externes Rechnersystem übertragen werden oder von dem externen Rechnersystem aus Distanz abgefragt werden.

In mehreren Phasen soll das Füllelementsystem 14 komplett in die Durchgangsöffnung 12 eingebaut werden.

In den nachfolgend beschriebenen Fig. 2 bis Fig. 5 wird dazu ein Verfahren zum Einbau des Füllelementsystems 14 in das Bauelement 10 mit der Durchgangsöffnung 12 anhand mehrerer Phasen beschrieben, wobei das Stellelement 22 solange vergrößert wird, bis der Signalgeber 32 des Sensorsystems 26 ein Signal gibt.

**Fig. 2** zeigt eine Startphase **1000** entsprechend dem Zustand des Bauelements 10 und der Durchgangsöffnung 12 gemäß Fig. 1. Insbesondere ist das Sensorsystem 26 in die Durchgangsöffnung 12 eingebaut.

In einer anschließenden Stapelphase **1010** gemäß **Fig. 3** werden in mehreren Lagen Füllelemente 16 aufeinander gestapelt in die Durchgangsöffnung 12 eingesetzt. Dabei werden nach Bedarf Verbindungsöffnungen 18 in die Füllelemente 16 eingearbeitet und Leitungen **48** durch diese Verbindungsöffnungen 18 hindurch verlegt. Jede Lage wird von einer nachfolgenden Lage durch eines der Trennbleche 20 getrennt.

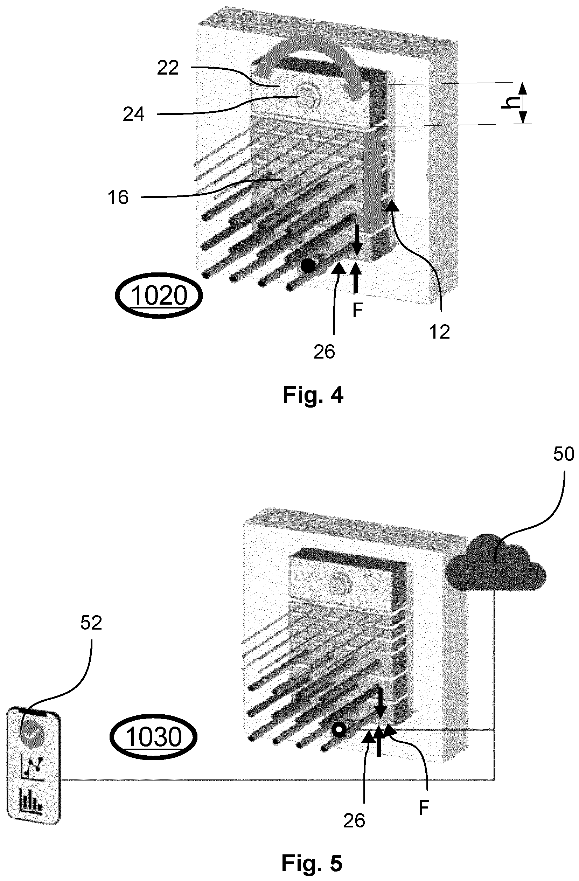

Schließlich wird eine Komprimierungsphase **1020** gemäß **Fig. 4** erreicht. In dieser wird das Stellelement 22 als oberer Abschluss des Stapels aus Füllelementen 16 in die Durchgangsöffnung 12 eingebaut.

Anschließend wird durch Betätigen, insbesondere durch Drehen, des Betätigungselements 24 die Abmessung h stetig vergrößert. Dadurch wird zunächst ein freier Querschnitt der Durchgangsöffnung 12 verkleinert und weiter ausgefüllt. Bei weiterer Vergrößerung der Abmessung h werden die Füllelemente 16 komprimiert und dadurch zusammengepresst. Das Sensorsystem 26 erfasst die auf dieses wirkende Kraft F und der Signalgeber 32 wird entsprechend angesteuert.

Ansprechend auf die Kraft F gibt der Signalgeber 32 somit ein Signal in Form eines Leuchtens in beispielsweise grün, sobald eine erforderliche Mindestkraft erreicht und / oder überschritten ist.

In letzterem Fall braucht die Abmessung h des Stellelements 22 nicht weiter vergrößert werden. Ein ordnungsgemäßer Einbau des Füllelementsystems 14 ist dann sichergestellt.

Diesen Zustand, bei dem der Signalgeber 32 ein dem Erreichen und / oder Überschreiten entsprechendes Signal gibt, zeigt **Fig. 5**.

Beispielsweise zu einem späteren Zeitpunkt kann in einer Überwachungsphase **1030** die vom Sensorsystem 26 erfasste Kraft F, beispielsweise indirekt über ein entferntes, Cloud-basiertes Rechnersystem **50** und von dort über beispielsweise ein Smartphone **52** oder direkt zwischen vom Sensorsystem 26 auf das Smartphone 52, das sich zu diesem Zweck in der Nähe des Sensorsystems 26 befinden kann, abgerufen werden.

Somit kann überprüft werden, ob das Füllelementsystem 14 weiterhin ordnungsgemäß sitzt oder ob es beispielsweise zu einem Defekt gekommen ist.

### Bezugszeichenliste

- 10: Bauelement
- 12: Durchgangsöffnung
- 14: Füllelementsystem
- 16: Füllelement
- 18: Verbindungsöffnung
- 20: Trennblech
- 22: Stellelement
- 24: Betätigungselement
- 26: Sensorsystem
- 28: Sensor
- 30: Sensorplatte
- 32: Signalgeber
- 34: Steuerung
- 36: Energiequelle
- 38: Microcontroller
- 40: Prozessor
- 42: Speicher
- 44: Programmcode
- 46: Kommunikationsmodul
- 48: Leitung
- 50: Rechnersystem
- 52: Smartphone
- 1000: Startphase
- 1010: Stapelphase
- 1020: Komprimierungsphase
- 1030: Überwachungsphase
- F: Kraft
- h: Abmessung

## Patentansprüche

1. **Füllelementsystem** (14) zum Einbau in eine Durchgangsöffnung (12) eines Bauelements (10), umfassend wenigstens
- ein Füllelement (16), insbesondere aus einem Brand-hemmenden Material ausgebildet,
- ein einstellbares Stellelement (22), das eingerichtet ist, eine einstellbare Kraft (F) und / oder einen einstellbaren Druck auf das Füllelement (16) auszuüben und / oder eine Abmessung (h), insbesondere des Stellelements (22) und / oder des Füllelements (16), einzustellen, und
- ein Sensorsystem (26),
- wobei das Sensorsystem (26) wenigstens einen Sensor (28) zur Erfassung der auf das Füllelement (16) wirkenden Kraft (F), des auf das Füllelement (16) wirkenden Drucks und / oder einer Abmessung (h), insbesondere des Stellelements (22) und / oder des Füllelements (16), aufweist.

2. Füllelementsystem nach dem vorhergehenden Anspruch, **dadurch gekennzeichnet, dass** das Sensorsystem (26) einen Signalgeber (32), beispielsweise eine Signalleuchte, aufweist.

3. Füllelementsystem nach einem der vorhergehenden Ansprüche, **dadurch gekennzeichnet, dass** das Sensorsystem (26) eingerichtet ist, ansprechend auf ein Erreichen und / oder ein Überschreiten einer Mindestkraft und / oder eines Mindestdrucks und / oder ansprechend auf ein Erreichen und / oder Überschreiten eines Grenzwertes der Abmessung (h) ein Signal auszugeben.

4. Füllelementsystem nach einem der vorhergehenden Ansprüche, **dadurch gekennzeichnet, dass** das Füllelement (16) zum Gefahrenschutz ausgebildet ist, beispielsweise Brandschutzelement, ein Schallschutzelement und / oder ein Fluid-Dichtelement ist.

5. Füllelementsystem nach einem der vorhergehenden Ansprüche, **dadurch gekennzeichnet, dass** das wenigstens eine Füllelement (16) ein elastisches Material aufweist.

6. **Bauelement (10)** eines Gebäudes, beispielsweise eine Wand, eine Decke oder ein Boden eines Gebäudes, wobei das Bauelement (10) eine Durchgangsöffnung (12) aufweist, und wobei in der Durchgangsöffnung (12) ein Füllelementsystem (14) nach einem der vorhergehenden Ansprüche angeordnet ist.

7. **Verfahren** zum Einbau eines Füllelementsystems (14) nach einem der Ansprüche 1 bis 5 in ein Bauelement (10) nach Anspruch 6, wobei das Stellelement (22) solange vergrößert wird, bis der Signalgeber (32) des Sensorsystems (26) ein Signal gibt.
